# EUROPÄISCHE PATENTSCHRIFT

(11) **EP 4 034 435 B1**
(45) Veröffentlichungstag und Bekanntmachung des Hinweises auf die Patenterteilung: **01.05.2024**
(21) Anmeldenummer: 20776115.6
(22) Anmeldetag: 18.09.2020
(51) Int. Cl.: B60T 11/16, B23Q 1/76, B23Q 3/00, B23Q 3/12, B23Q 3/18, B23C 3/24, B23Q 3/08

(54) **HERSTELLOPTIMIERTES GEHÄUSE FÜR EIN HYDRAULISCHES AGGREGAT ZUM ERZEUGEN VON BREMSDRUCK FÜR EINE HYDRAULISCHE BREMSANLAGE**
MANUFACTURED OPTIMIZED HOUSING FOR A HYDRAULIC UNIT FOR GENERATING BRAKING PRESSURE FOR A HYDRAULIC BRAKE SYSTEM
BOITIER OPTIMISÉ FABRIQUÉ POUR UNITÉ HYDRAULIQUE POUR GÉNÉRER UNE PRESSION DE FREINAGE POUR UN SYSTÈME DE FREINAGE HYDRAULIQUE

(30) Priorität: 27.09.2019 DE 102019214917
(43) Veröffentlichungstag der Anmeldung: 03.08.2022
(73) Patentinhaber: Continental Automotive Technologies GmbH, 30175 Hannover (DE)
(72) Erfinder: LOKE, Jörg, 60488 Frankfurt am Main (DE); KRÄMER, Horst, 60488 Frankfurt am Main (DE); RÜFFER, Manfred, 60488 Frankfurt am Main (DE)
(74) Vertreter: Continental Corporation
(86) Internationale Anmeldenummer: PCT/EP2020/076158
(87) Internationale Veröffentlichungsnummer: WO 2021/058400

(56) Entgegenhaltungen:
- CN-U- 201 493 695
- CN-U- 203 765 340
- CN-U- 210 789 978
- DE-A1- 4 202 989
- US-A1- 2005 247 193

## Beschreibung

Die Erfindung bezieht sich auf ein Gehäuse für ein hydraulisches Aggregat, insbesondere einen Hauptbremszylinder für eine hydraulische Kraftfahrzeugbremsanlage, sowie das entsprechende Aggregat und die Bremsanlage.

Bei der Herstellung von derartigen Gehäusen wird meisten zunächst aus einer Leichtmetalllegierung Rohling gegossen, welches anschließend an verschiedenen Stellen mit spanabhebenden Verfahren bearbeitet wird.

Aus CN 203765340 U ist es beispielsweise bekannt, ein Gehäuse eines hydraulischen Zylinders zur Bearbeitung zwischen zwei entlang seiner Längsachse gegenüberliegenden Spannbacken einzuspannen, wobei eine der Spannbacken einen Zentrierkonus aufweist. Bei einer derartigen Aufspannung ist die Bearbeitung auf wenige Raumachsen, insbesondere quer zur Längsachse, beschränkt.

Zur Herstellung eines Gehäuses aus einem Rohling müssen jedoch meist diverse Bohrungen, Dicht- und Anlageflächen, Nuten und Dergleichen erzeugt werden, welche in verschiedene Raumrichtungen ausgerichtet sind und in sich, sowie zueinander, eng toleriert sind.

Zu diesem Zweck muss der Rohling oft mehrfach in derselben oder sogar mehreren unterschiedlichen Haltevorrichtung beziehungsweise Werkstückträgern in verschiedenen räumlichen Positionen umgespannt und neupositioniert, sowie mit an die jeweilige Außengestalt von jeden unterschiedlichen Rohling individuell angepassten Wechseladaptern und Klemmvorrichtungen sicher fixiert werden. Für das Einhalten geforderter Toleranzen beim Bearbeitungsprozess besonders wichtig sind neben einer exakten und zuverlässig reproduzierbaren räumlichen Positionierung auch eine sichere sowie verzugsfreie Abstützung von hohen Spannkräften, welche zur Aufnahme von beim Zerspanen entstehenden Lasten erforderlich sind. Um Ausschuss zu vermeiden ist dies mit einem signifikanten Kontrollaufwand bei Werkzeugwechsel, Umspannungen, Lageänderungen sowie Notwendigkeit von umfangeichen Werkzeuglagern etc. verbunden, was die Herstellkosten erheblich erhöht.

Die Erfindung beruht somit auf der Aufgabe, Gehäuseherstellung ohne Qualitätsverlust zu optimieren, insbesondere günstiger zu gestalten und eine einfache und sichere Reproduzierbarkeit zu ermöglichen.

Die Aufgabe wird erfindungsgemäß mit der Merkmalskombination nach dem Anspruch 1 gelöst. Unteransprüche zusammen mit Figurenbeschreibungen geben weitere vorteilhafte Ausführungen und Weiterbildungen der Erfindung an.

Durch die erfindungsgemäße Merkmalskombination wird es ermöglicht, ein günstiges standardisiertes und robustes Konzept mit standardisierten und vereinfachten Werkstückaufnahmen zu realisieren. Fehler und Zeitverlust aufgrund von falschen Werkstückaufnahmen werden vermieden. Es ergibt sich eine signifikante Zeitersparnis beim Rüstvorgang. Zugleich werden Spannpunkte an optimierte Positionen verlegt, welche verzugsfreie Anwendung von erhöhten Spannkräften erlauben. Das Positionieren und Spannen des Gehäuses 1 erfolgt präzise, exakt reproduzierbar und damit prozesssicher.

Die jeweiligen Merkmale und Vorteile der Erfindung werden nachfolgen anhand der Beschreibung und Zeichnungen detailliert erklärt. Hierbei zeigen:

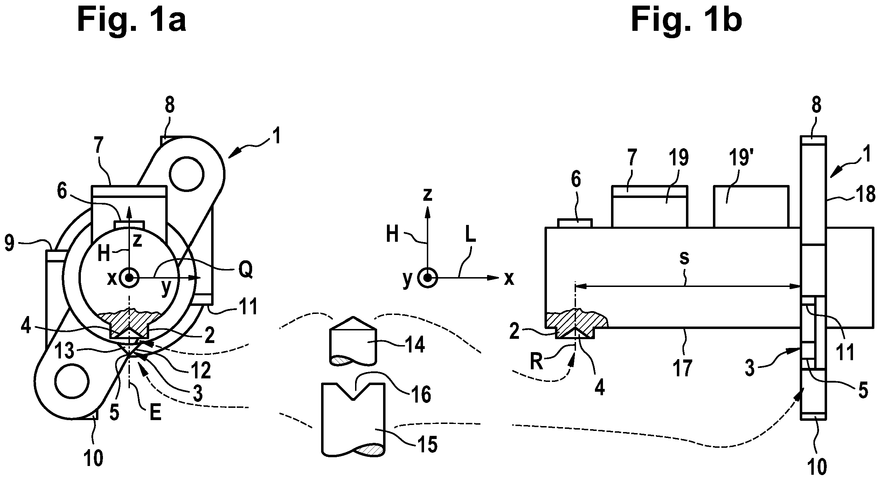

Fig.1 stark vereinfachte Prinzipdarstellung von einem erfindungsgemäßen Gehäuse in Front- (a) und Seitenansicht (b) .
Fig.2 das erste Formelement gemäß einer weiteren Ausführungsform.
Fig.3 eine erfindungsgemäße Ausführungsform des Gehäuses in verschiedenen räumlichen Ansichten (a, b).
Fig.4 das erste Formelement gemäß einer anderen Ausführungsform.

Hierbei wird für zwecks einer klaren und eindeutigen Offenbarung die räumliche Gestalt und Lage des Gehäuses 1 in Relation zu einem Achsenkreuz in einem kartesischen Koordinatensystem dargelegt, wobei X-Achse der Längsachse L, Y-Achse der Querachse Q und Z-Achse der Hochachse H vom Gehäuse 1 entsprechen.

### Fig. 1

In dem gezeigten Beispiel ist, stark vereinfacht, das Gehäuse 1 eines Tandem-Hauptbremszylinders für eine hydraulische Kraftfahrzeug-Bremsanlage dargestellt.

Das Rohling des Gehäuses 1 eines Hauptbremszylinders wird meist einteilig in einem Gießverfahren aus einer Aluminiumlegierung hergestellt, anschließend durch Zerspannen mit erforderlichen Oberflächen, Profilen und Funktionselementen versehen. Beispielsweise weist es einen entlang einer Längsachse L gestreckten, im wesentlichen zylindrischen Hauptkörper, in dem eine Sackbohrung zur Aufnahme von Kolben gebohrt werden muss; einen quer zu der Längsachse L gestreckten Befestigungsflansch 18, welcher zum Befestigen des Hauptbremszylinders an einem Bremskraftverstärker dient und Plangedreht werden muss; mehrere ausgeformte Erhöhungen 19,19',19", in denen Aufnahmeprofile für diverse Anschlüsse gebohrt werden müssen und weitere Bereiche, welche mit einem spanabhebenden Fertigungsverfahren bearbeitet werden. Zu diesem Zweck muss das Gehäuse 1 auf einer hier nicht gezeigten Haltevorrichtung beziehungsweise Werkstückträger in einer exakt definierten Raumlage positioniert und in dieser Position festgehalten werden.

Unterseitig an dem Gehäuse 1 sind zwei gesonderte Formelemente 2,3 entlang der Hochachse H ausgerichtet ausgebildet.

Bei der gezeigten Ausführungsform verfügt das erste Formelement 2 endseitig über eine nach innen gerichtete, eine Kavität bildende rotationssymmetrische Ausformung 4, deren Rotationsachse R im Wesentlichen orthogonal zu Längsachse L gerichtet ist. In der Haltevorrichtung wird das erste Formelement 3 auf einem ersten Auflageelement 14 positioniert, welches hierfür endseitig komplementär konisch ausgebildet ist. Neben Übertragung von Spannkräften aus dem Gehäuse 1 in die Haltevorrichtung kann durch die zentrierende Wirkung der Ausformung 4 auch die Nulllage des Gehäuses 1 entlang der Längsachse L exakt festgelegt und während der Bearbeitung aufrechterhalten werden.

Innerhalb der Erfindung wäre es ebenso zulässig, die Ausformung 4 auch nach außen gerichtet auszubilden und eine aufnehmende komplementäre Kavität in dem ersten Auflageelement 14 vorzusehen.

In einem definierten Abstand S zum ersten Formelement 2 ist im Bereich des Befestigungsflansches 18 am Gehäuse 1 ein anderes, zweites Formelement 3 ausgebildet. Das zweite Formelement 3 ist in zentrifugale Richtung zur Längsachse L, hier entlang der Hochachse H verjüngend ausgebildet. Es verfügt über zwei parallel zur Längsachse L ausgerichteten, einender zulaufenden Flanken 12 und 13.

Im dargestellten Ausführungsbeispiel das zweite Formelement 3 im spiegelsymmetrisch keilförmig gestaltet, die Flanken 12,13 sind flach, rechtwinklig zueinander ausgerichtet und laufen an einer endseitigen Außenkante 5 zusammen. Die Außenkante 5 verläuft somit parallel zu der Längsachse L. Es wäre ebenfalls möglich, die Flanken 12,13 auch leicht konvex oder konkav auszubilden, ohne die Erfindung zu verlassen.

Es sei hierbei angemerkt, dass eine exakte Parallelität bei einem Gussrohling technologisch bedingt nicht immer erreichbar ist, so dass innerhalb der Erfindung eine möglichst hohe Annäherung daran ebenfalls tolerierbar ist.

In der Haltevorrichtung wird das zweite Formelement 3 in einem zweiten Auflageelement 15 positioniert, welches hierfür einen komplementären Ausschnitt 16 aufweist. Neben Übertragung von Spannkräften wird durch stützende sowie selbstzentrierende Wirkung schräg zueinander ausgerichteter Flanken 12 und 13 eine exakte Nulllage in Bezug zum Rollen um die Längsachse L des Gehäuses 1 festgelegt und während der Bearbeitung aufrechterhalten werden. Etwaigen Kippmomenten wird effektiv entgegengewirkt.

Für einen optimale symmetrischen Kräfteverlauf können die Rotationsachse R und die Außenkante 5 bevorzugt wie dargestellt in einer gemeinsamen Ebene E angeordnet sein, welche durch die Längsachse L und die Hochachse H des Gehäuses 1 verläuft.

Bei Auflage des ersten Formelements 2 am ersten Auflageelement 14 und gleichzeitig des zweiten Formelements 3 am zweiten Auflageelement 15 wird eine präzise, räumlich eindeutig definierte Lagerung beziehungsweise Positionierung des Gehäuses 1 in der externen Haltevorrichtung realisiert. Diese Positionierung ist zudem exakt reproduzierbar sowohl für denselben oder gleiche Rohlinge, als auch für unterschiedliche Rohlinge, welche mit identischen, im geleichen Abstand S zueinander ausgebildeten Formelementen 2,3 versehen sind.

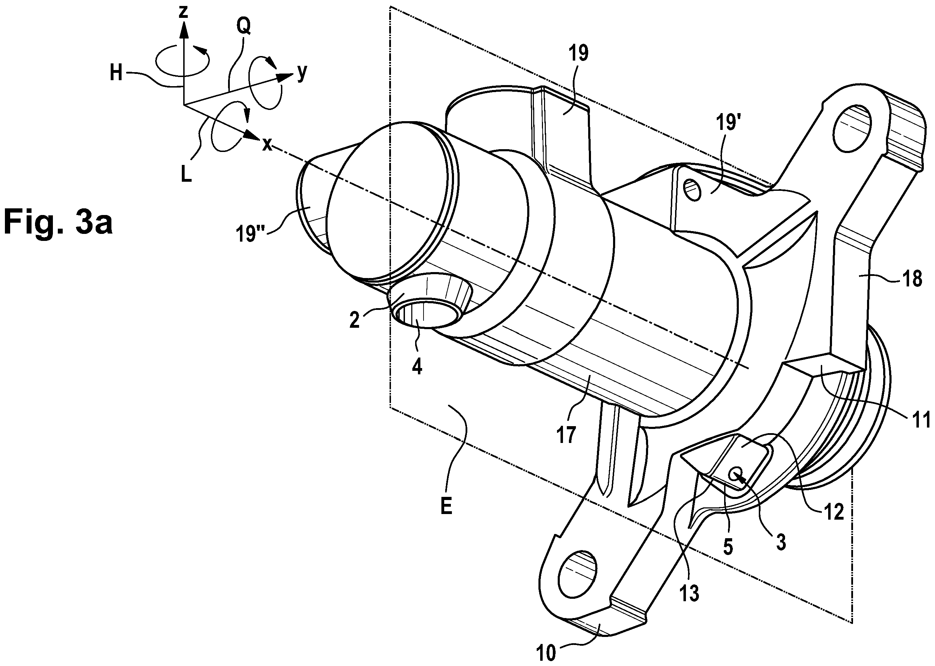

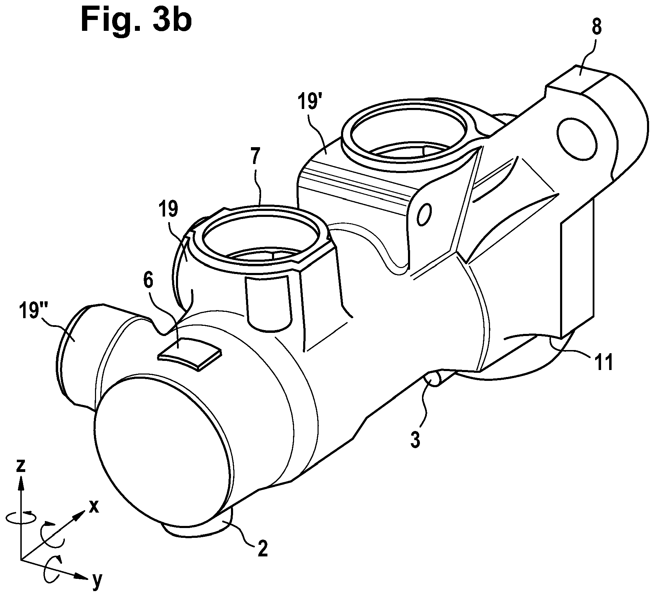

Wie auch in der Fig.3 zu sehen, sind an einer den Formelementen 2 und 3 in Bezug zur Längsachse l gegenüberliegenden Seite vom Gehäuse 1 gesonderte, orthogonal zu Hochachse H ausgerichteten Spannflächen 6,7,8,9 ausgebildet. Sie dienen zum Anlegen von hier nicht gezeigten Spannbacken zwecks Fixierung des Gehäuses 1 in der externen Haltevorrichtung.

Parallel zu den Spannflächen 6;7;8;9, auf der gegenüberliegenden Seite des Gehäuses 1 sind gesonderte Stützflächen 10;11 ausgebildet. Diese dienen zum Einleiten der Spannkräfte aus dem Gehäuse 1 in die externe Haltevorrichtung.

Weil die Spannfläche 6 und das erste Formelement 2 direkt übereinander liegen, führen die Spannkräfte nicht zu einer Hebelwirkung und es entsteht weder ein Nickmoment um die Querachse Q, noch um die Längsachse L und der Hauptkörper 17 wird auch nicht auf Biegung belastet. Damit bleibt eine Maßoder Winkeltoleranzgefährdende Verformung des Hauptkörper 17 aufgrund von Spannkräften aus.

Ebenso verhält es sich mit den jeweiligen im Wesentlichen übereinander in Bezug zur Hochachse H angeordneten Paarungen Spannfläche 8 mit Stützfläche 11 und Spannfläche 9 mit Stützfläche 10.

### Fig.2

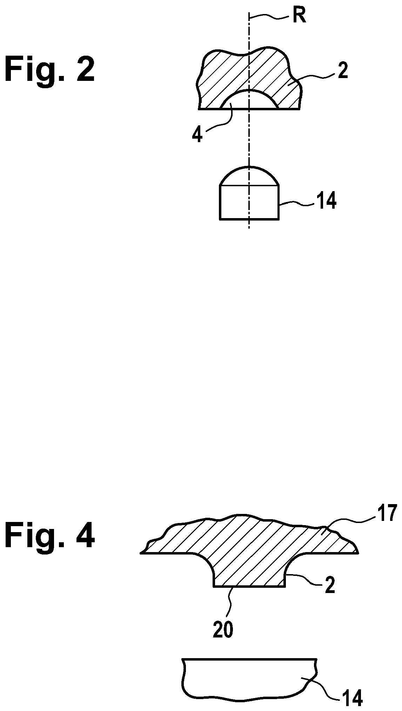

In der Fig.2 ist beispielhaft eine der weiteren möglichen Ausführungsformen des ersten Formelements 2 dargestellt, welche auch gröbe Winkeltoleranzen verträgt und zudem besonders hohe Spannkräfte aufnehmen kann. Die Ausformung 4 hat eine kugelige Form, welche mit einem entsprechend komplementär halbkugelig ausgebildeten ersten Auflageelement 14 der Haltevorrichtung zusammenwirkt.

### Fig.3

Zu Verdeutlichung wird in der Fig.3 eine mögliche Implementierung der Erfindung beispielhaft an einem Gehäuse 1 eines Tandem-Hauptbremszylinders einer hydraulischen Kraftfahrzeugbremsanlage in zwei räumlichen Ansichten dargestellt. Insbesondere lässt sich erkennen, dass die beiden Formelemente 2 und 3 in einer gemeinsamen Ebene E angeordnet sind, welche durch die Längsachse L verläuft. Dadurch wird beispielsweise verhindert, dass beim Bohren von Anschlussprofilen in den Erhöhungen 19,19', deren Rotationsachsen durch dieselbe Ebene E verlaufen, Rollmomente um die Längsachse L aufgrund von Hebelwirkung entstehen.

### Fig.4

Gemäß einer anderen, besonders robusten Ausführungsform ist das erste Formelement 2 massiv ausgeformt und verfügt endseitig statt einer Ausformung über eine plan ausgebildete Stützfläche 20, welche insbesondere dafür geeignet ist, besonders hohen Spannkräfte in das korrespondierende erste Auflageelement 14 der Haltevorrichtung einzuleiten, welche über die parallele Spannfläche 6 in das Gehäuse 1 eingebracht werden.

### Bezugszeichenliste

- 1: Gehäuse
- 2: erstes Formelement
- 3: zweites Formelement
- 4: Ausformung
- 5: Außenkante
- 6: Spannfläche
- 7: Spannfläche
- 8: Spannfläche
- 9: Spannfläche
- 10: Stützfläche
- 11: Stützfläche
- 12: Flanke
- 13: Flanke
- 14: Auflageelement
- 15: Auflageelement
- 16: Ausschnitt
- 17: Hauptkörper
- 18: Befestigungsflansch
- 19: Erhöhung
- 20: Stützfläche
- E: Ebene
- L: Längsachse
- H: Hochachse
- Q: Querachse
- R: Rotationsachse
- S: Abstand

## Patentansprüche

1. Gehäuse (1) für ein hydraulisches Aggregat zum Erzeugen von Bremsdruck für eine hydraulische Bremsanlage, insbesondere eine Kraftfahrzeugbremsanlage, wobei das Gehäuse (1) zumindest abschnittsweise entlang einer Längsachse (L) getreckt ausgebildet und zumindest bereichsweise zum Zerspanen vorgesehen ist **dadurch gekennzeichnet, dass** neben Längsachse L eine räumliche Querachse Q sowie eine räumliche Hochachse H derart definiert sind, dass sie ein Achsenkreuz eines kartesischen Koordinatensystems bilden, wobei an wenigstens einer Seite vom Gehäuse (1) wenigstes ein erstes (2) und ein zweites (3) gesonderte Formelemente für eine räumlich eindeutig definierte Lagerung des Gehäuses (1) und Einleitung von Spannkräften in eine externe Haltevorrichtung ausgebildet sind und an einer zweiten, den Formelementen (2) und (3) in Bezug zur Längsachse (l) gegenüberliegenden Seite vom Gehäuse (1), wenigstens eine gesonderte Spannfläche (6;7;8;9) parallel zu einer orthogonal zu Hochachse (H) ausgerichteten Ebene ausgebildet ist, welche zum Anlegen einer Spannbacke zwecks Fixierung des Gehäuses (1) in der Haltevorrichtung vorgesehen ist.

2. Gehäuse (1) nach Anspruch 1 **dadurch gekennzeichnet, dass** an einer der Spannfläche (6;7;8;9) in Bezug zur Längsachse (l) gegenüberliegenden Seite vom Gehäuse (1) wenigstens eine gesonderte parallel zu der Spannfläche (6;7;8;9) ausgerichtete Stützfläche (10;11;20) ausgebildet ist, welche zum Einleiten der Spannkräfte in die Haltevorrichtung vorgesehen ist.

3. Gehäuse (1) nach wenigstens einem der vorstehenden Ansprüche **dadurch gekennzeichnet, dass** das erste Formelement (2) zur Definition einer Nulllage entlang der Längsachse (L) des Gehäuses (1) vorgesehen ist.

4. Gehäuse (1) nach wenigstens einem der vorstehenden Ansprüche **dadurch gekennzeichnet, dass** das erste Formelement (2) endseitig eine plan ausgebildete Stützfläche (20) zum Einleiten von Spannkräften in die externe Haltevorrichtung aufweist.

5. Gehäuse (1) nach wenigstens einem der vorstehenden Ansprüche **dadurch gekennzeichnet, dass** das erste Formelement (2) eine rotationssymmetrische Ausformung (4) aufweist, deren Rotationsachse (R) im Wesentlichen orthogonal zu Längsachse (L) gerichtet ist.

6. Gehäuse (1) nach wenigstens einem der vorstehenden Ansprüche **dadurch gekennzeichnet, dass** das zweite Formelement (3) zum Festlegen einer Nulllage in Bezug zum Rollen um die Längsachse (L) des Gehäuses (1) vorgesehen ist.

7. Gehäuse (1) nach wenigstens einem der vorstehenden Ansprüche **dadurch gekennzeichnet, dass** das zweite Formelement (3) in Bezug zur Längsachse (L) in zentrifugale Richtung verjüngend ausgebildet ist und zwei Flanken (12,13) aufweist, welche parallel zur Längsachse (L) ausgerichtet sind und einender zulaufen.

8. Gehäuse (1) nach Anspruch 7 **dadurch gekennzeichnet, dass** das zweite Formelement (3) im Wesentlichen keilförmig mit einer Außenkante (5) ausgebildet ist, welche im Wesentlichen achsparallel zu der Längsachse (L) ausgerichtet ist.

9. Gehäuse (1) nach Ansprüchen 5 und 8 **dadurch gekennzeichnet, dass** die Rotationsachse (R) und die Außenkante (5) in einer gemeinsamen Ebene (E) angeordnet sind, welche durch die Längsachse (L) und die Hochachse (H) des Gehäuses (1) verläuft.

10. Gehäuse (1) nach wenigstens einem der vorstehenden Ansprüche **dadurch gekennzeichnet, dass** das hydraulische Aggregat ein Hauptbremszylinder für eine hydraulische Bremsanlage ist.

11. Hydraulisches Aggregat umfassend wenigstens ein Gehäuse (1) nach wenigstens einem der vorstehenden Ansprüche.

12. Hydraulische Kraftfahrzeugbremsanlage umfassend wenigstens ein hydraulisches Aggregat nach Anspruch 11.

## Claims

1. Housing (1) for a hydraulic unit for producing brake pressure for a hydraulic brake system, in particular a motor vehicle brake system, wherein the housing (1) is configured so as to be elongate at least in portions along a longitudinal axis (L) and is provided for machining at least in regions, **characterized in that,** in addition to the longitudinal axis L, a spatial transverse axis Q and a spatial vertical axis H are defined such that they form an axis intersection of a Cartesian coordinate system, wherein at least a first (2) and a second (3) separate formed element are arranged on at least one side of the housing (1) for a spatially clearly defined mounting of the housing (1) and introduction of clamping forces into an external holding device, and on a second side of the housing (1) opposite the formed elements (2) and (3) relative to the longitudinal axis (1), at least one separate clamping face (6; 7; 8; 9) is formed parallel to a plane oriented orthogonally to the vertical axis (H), said face being provided for application of a clamping jaw for fixing of the housing (1) in the holding device.

2. Housing (1) according to Claim 1, **characterized in that** on a side of the housing (1) opposite the clamping face (6; 7; 8; 9) relative to the longitudinal axis (1), at least one separate supporting face (10; 11; 20) is formed which is oriented parallel to the clamping face (6; 7; 8; 9) and is provided for the introduction of clamping forces into the holding device.

3. Housing (1) according to at least one of the preceding claims, **characterized in that** the first formed element (2) is provided for definition of a neutral position along the longitudinal axis (L) of the housing (1).

4. Housing (1) according to at least one of the preceding claims, **characterized in that** the first formed element (2) comprises on the end side a flat supporting face (20) for the introduction of clamping forces into the external holding device.

5. Housing (1) according to at least one of the preceding claims, **characterized in that** the first formed element (2) has a rotationally symmetrical shaping (4), the rotational axis (R) of which is directed substantially orthogonally to the longitudinal axis (L).

6. Housing (1) according to at least one of the preceding claims, **characterized in that** the second formed element (3) is provided for establishing a neutral position with respect to rolling about the longitudinal axis (L) of the housing (1).

7. Housing (1) according to at least one of the preceding claims, **characterized in that** the second formed element (3) is configured such that it tapers in the centrifugal direction relative to the longitudinal axis (L) and has two flanks (12,13) which are oriented parallel to the longitudinal axis (L) and run towards one another.

8. Housing (1) according to Claim 7, **characterized in that** the second formed element (3) is configured so as to be substantially wedge-shaped with an outer edge (5) which is oriented substantially axially parallel to the longitudinal axis (L).

9. Housing (1) according to Claims 5 and 8, **characterized in that** the rotational axis (R) and the outer edge (5) are arranged in a common plane (E) which runs through the longitudinal axis (L) and the vertical axis (H) of the housing (1).

10. Housing (1) according to at least one of the preceding claims, **characterized in that** the hydraulic unit is a master brake cylinder for a hydraulic brake system.

11. Hydraulic unit comprising at least one housing (1) according to at least one of the preceding claims.

12. Hydraulic motor vehicle brake system comprising at least one hydraulic unit according to Claim 11.

## Revendications

1. Boîtier (1) pour un groupe hydraulique pour générer une pression de freinage pour un système de freinage hydraulique, notamment un système de freinage de véhicule automobile, le boîtier (1) étant réalisé étiré au moins par sections le long d'un axe longitudinal (L) et étant prévu au moins par zones pour l'usinage par enlèvement de copeaux, **caractérisé en ce qu'**outre l'axe longitudinal L, un axe transversal spatial Q ainsi qu'un axe vertical spatial H sont définis de telle sorte qu'ils forment une croix d'axes d'un système de coordonnées cartésiennes, au moins un premier (2) et un deuxième (3) éléments de forme séparés étant réalisés sur au moins un côté du boîtier (1) pour un montage clairement défini dans l'espace du boîtier (1) et l'introduction de forces de serrage dans un dispositif de maintien externe, et au moins une surface de serrage séparée (6 ; 7 ; 8 ; 9) étant réalisée sur un deuxième côté du boîtier (1) opposé aux éléments de forme (2) et (3) par rapport à l'axe longitudinal (1), parallèlement à un plan orienté orthogonalement à l'axe vertical (H), laquelle est prévue pour l'application d'une mâchoire de serrage en vue de la fixation du boîtier (1) dans le dispositif de maintien.

2. Boîtier (1) selon la revendication 1, **caractérisé en ce que** sur un côté du boîtier (1) opposé à la surface de serrage (6 ; 7 ; 8 ; 9) par rapport à l'axe longitudinal (1) est réalisée au moins une surface d'appui (10 ; 11 ; 20) séparée, orientée parallèlement à la surface de serrage (6 ; 7 ; 8 ; 9), laquelle est prévue pour introduire les forces de serrage dans le dispositif de maintien.

3. Boîtier (1) selon au moins l'une quelconque des revendications précédentes, **caractérisé en ce que** le premier élément de forme (2) est prévu pour définir une position zéro le long de l'axe longitudinal (L) du boîtier (1).

4. Boîtier (1) selon au moins l'une quelconque des revendications précédentes, **caractérisé en ce que** le premier élément de forme (2) présente à son extrémité une surface d'appui (20) réalisée sous forme plane pour introduire des forces de serrage dans le dispositif de maintien externe.

5. Boîtier (1) selon au moins l'une quelconque des revendications précédentes, **caractérisé en ce que** le premier élément de forme (2) présente une conformation (4) à symétrie de révolution dont l'axe de rotation (R) est orienté essentiellement orthogonalement à l'axe longitudinal (L).

6. Boîtier (1) selon au moins l'une quelconque des revendications précédentes, **caractérisé en ce que** le deuxième élément de forme (3) est prévu pour établir une position zéro par rapport au roulement autour de l'axe longitudinal (L) du boîtier (1).

7. Boîtier (1) selon au moins l'une quelconque des revendications précédentes, **caractérisé en ce que** le deuxième élément de forme (3) est réalisé en se rétrécissant en direction centrifuge par rapport à l'axe longitudinal (L) et présente deux flancs (12,13) qui sont orientés parallèlement à l'axe longitudinal (L) et se terminent en un seul.

8. Boîtier (1) selon la revendication 7, **caractérisé en ce que** le deuxième élément de forme (3) est réalisé essentiellement en forme de coin avec un bord extérieur (5) qui est orienté essentiellement en parallélisme axial avec l'axe longitudinal (L).

9. Boîtier (1) selon les revendications 5 et 8, **caractérisé en ce que** l'axe de rotation (R) et le bord extérieur (5) sont agencés dans un plan commun (E) qui passe par l'axe longitudinal (L) et l'axe vertical (H) du boîtier (1).

10. Boîtier (1) selon au moins l'une quelconque des revendications précédentes, **caractérisé en ce que** le groupe hydraulique est un maître-cylindre de frein pour un système de freinage hydraulique.

11. Groupe hydraulique comprenant au moins un boîtier (1) selon au moins l'une quelconque des revendications précédentes.

12. Système de freinage hydraulique de véhicule automobile comprenant au moins un groupe hydraulique selon la revendication 11.
